## Europäisches Patentamt

## European Patent Office

## Office européen des brevets

(11) Veröffentlichungsnummer: **0 207 303**
B1

(12)

# EUROPÄISCHE PATENTSCHRIFT

(45) Veröffentlichungstag der Patentschrift:
16.08.89

(51) Int. Cl.⁴: **B 65 G 65/40**, B 65 D 88/68

(21) Anmeldenummer: 86107414.4

(22) Anmeldetag: 31.05.86

(54) Einrichtung zum Dosieren und Austragen von Fliessfähigen Schüttgütern.

(30) Priorität: 05.06.85 DE 3520240
05.06.85 DE 3520280

(43) Veröffentlichungstag der Anmeldung:
07.01.87 Patentblatt 87/2

(45) Bekanntmachung des Hinweises auf die Patenterteilung:
16.08.89 Patentblatt 89/33

(84) Benannte Vertragsstaaten:
AT BE CH FR GB IT LI

(56) Entgegenhaltungen:
DE-B- 1 039 928
DE-C- 962 417
GB-A- 1 171 088
GB-A- 1 182 862
GB-A- 1 216 409

(73) Patentinhaber: Pfister GmbH, Stätzlinger Strasse 70,
D-8900 Augsburg (DE)

(72) Erfinder: Kasten, Hans-Georg, Parkstrasse 1,
8901 Stadtbergen 2 (DE)
Erfinder: Schwab, Hans, Holderstrasse 1,
D-8901 Stadtbergen 1 (DE)
Erfinder: Rieger, Michael, Schulstrasse 17,
D-8901 Baindlkirch (DE)
Erfinder: Häfner, Hans W., Fichtenweg 15,
D-8890 Aichach-Walchshofen (DE)

(74) Vertreter: Kahler, Kurt, Dipl.-Ing., Patentanwälte Kahler
& Käck Gerberstrasse 3 Postfach 1249,
D-8948 Mindelheim (DE)

## Beschreibung

Die Erfindung betrifft eine Einrichtung zum Dosieren und Austragen von fließfähigen Schüttgütern gemäß dem Oberbegriff des Patentanspruchs 1. Eine solche Einrichtung ist bekannt und gehört zum Stand der Technik.

Bei vielen Industriellen Anwendungen ist es erforderlich, schüttfähiges Gut aus Behältern, Zuführleitungen oder dgl. möglichst gleichförmig und ggf. dosiert abzugeben. Dies gilt insbesondere beim Zusammenstellen von rezepttreuen Chargen aus verschiedenen Komponenten, bei denen sowohl eine rasche Grobdosierung als auch eine präzise Feindosierung erforderlich ist. Bei vielen schüttfähigen Gütern, insbesondere pulverförmigen oder mehlartigen Gütern, besteht jedoch die Gefahr, daß sich über Dosierbzw. Austrageinrichtung ein sogenannter Dom bildet, unter dem z.B. eine Förderschnecke leerläuft und damit die Austragmenge stark verfälscht.

Bei bekannten Geräten sind deshalb mindestens zwei getrennte Systeme für die Grob- und Feindosierung sowie gegen die Dombildung erforderlich, beispielsweise zwei oder mehrere Dosierschnecken oder Walzen mit Motorantrieb gegen die Dombildung.

Die GB-A-1 171 088 beschreibt eine Austrageinrichtung in Verbindung mit einer Rütteleinrichtung, die mit der Austragförderschnecke zusammenwirkt. Eine Grobdosierungsmöglichkeit ist hierbei jedoch nicht vorgesehen.

Demzufolge liegt der Erfindung die Aufgabe zugrunde, eine Einrichtung zum Austragen und Dosieren zu schaffen, die mit einfachen Mitteln einen stockungsfreien Fördergutfluß mit rascher Grobdosierung und präziser Feindosierung zuläßt. Diese Aufgabe wird gemäß der Erfindung gelöst durch eine Einrichtung mit den Merkmalen des Kennzeichens des Patentanspruchs 1.

Durch die Integration der Feindosierung in der Welle der Grobdosiervorrichtung genügt die Anordnung einer einzigen Kombinationseinheit sowohl für die Grobdosierung als auch für die Feindosierung. Durch die Anordnung der Rütteleinrichtung auf der Dosierklappe wird das Verschwenken der Dosierklappe für die Grobdosierung nicht behindert und eine Dombildung zuverlässig verhindert, so daß eine gleichförmige Zuführung und stockungsfreier Fördergutfluß zu den Dosiereinrichtungen, insbesondere zu der Feindosierungseinrichtung und damit präzise Dosierung erreicht wird.

Vorteilhafte Weiterbildungen der erfindungsgemäßen Einrichtung sind Gegenstand der Unteransprüche und ergeben sich aus der nachfolgenden Beschreibung.

Ausführungsbeispiele der erfindungsgemäßen Austragseinrichtung werden nachstehend unter Bezugnahme auf die Zeichnung näher erläutert. Es zeigen:

Fig. 1 eine Schnittansicht eines Behälters einer Ausführungsform einer Grobdosiervorrichtung, bei der die Erfindung angewendet wird,

Fig. 2 eine um 90° verdrehte Schnittansicht der Einrichtung nach Fig. 1 im Schnitt.

Fig. 3 eine Draufsicht einer Ausführungsform einer erfindungsgemäßen Einrichtung in Anwendung auf eine Dosiereinrichtung gemäß der Fig. 1 und 2,

Fig. 4 eine Seitenansicht einer Einrichtung nach Fig. 3,

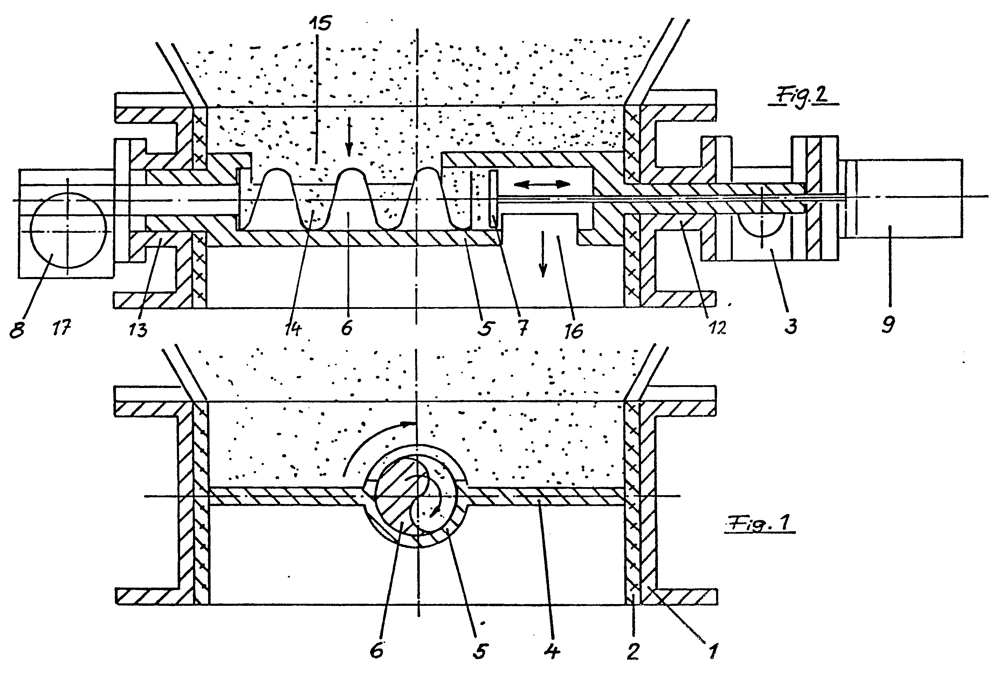

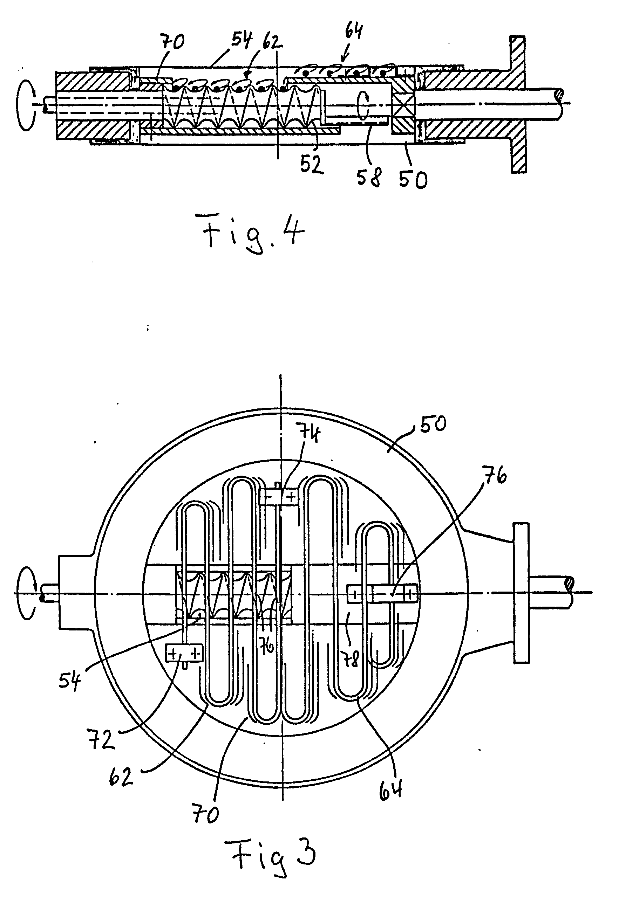

In einem flanschbaren, vorzugsweise zylindrischen Gehäuse 1, das mit Anschlußflanschen zum Montieren von Kraftantrieben (Fig. 2) versehen ist, befindet sich ein um eine horizontale Achse drehbarer Teller 4. Zwischen der Gehäuseinnenwand und dem Umfang des Tellers 4 in seiner geschlossenen Position (Fig. 1) ist vorzugsweise eine Dichtung 2 vorgesehen. Der Teller 4 ist aus seiner geschlossenen Position in eine beliebige Winkellage zwischen 0 und 90° mittels eines Schwenkantriebs 3 über eine Hohlwelle 5 einstellbar. Hierdurch kann die Grobdosierleistung variiert werden.

Die in Lagern 12, 13 in gegenüberliegenden Gehäusewänden gelagerte Hohlwelle 5 ist nun gemäß der Erfindung besonders ausgebildet. Der in der Hohlwelle 5 ausgebildete Raum 14 ist über einen bestimmten Teil der Länge der Hohlwelle, beispielsweise über ein Drittel bis zwei Drittel seiner Länge über einen Winkel von beispielsweise 90 bis 180°, bevorzugt in der Größenordnung von 120° bis 150° in der Stellung des Tellers 4 gemäß Fig. 1 nach oben hin offen. Der Hohlraum 14 besitzt ferner eine weitere vorzugsweise kleinere Öffnung 16 in Fig. 2 auf der rechten Seite der Hohlwelle 5.

Im Bereich der großen Öffnung 15 ist eine Schnecke 6 angeordnet, die über eine Welle 17 von einem Drehantrieb 8 antreibbar ist.

Im Bereich der kleineren, nach unten hin gerichteten Öffnung 16 ist ein Kolben 7 in dem Hohlraum 14 in Richtung der Drehachse der Hohlwelle 5 über eine Hubantrieb 9 derart verschiebbar, daß der Kolben 7 in seiner in Fig. 2 linken Stellung den Hohlraum 14 von der Öffnung 16 absperrt, während er in seiner rechten Stellung die Öffnung 16 freigibt.

Der Hubantrieb 9 kann beispielsweise ein Pneumatikantrieb sein, der abhängig von der Steuerung der Dosier- bzw. Wägevorrichtung gesteuert wird, bei der die erfindungsgemäße Einrichtung Anwendung findet. Auch der Antrieb 8, bevorzugt als elektrischer Antrieb oder als Hydraulikmotor ausgeführt, kann von dieser Steuerung ein- und ausgeschaltet bzw. in seiner Drehzahl geregelt werden.

Eine Alternative zum Pneumatikantrieb 9 für den Kolben 7 wäre eine Umschaltung des Drehantriebs 3 für den Teller 4 auf den Kolben 7 etwa mittels eines Schneckengetriebes oder dgl.

Die erfindungsgemäße Einrichtung arbeitet wie folgt:

Für eine Grobdosierung wird mittels des Drehantriebs 3 der Teller in eine gewünschte Winkelstellung gebracht. Nach Beendigung der Grobdosierung schließt die Steuerung der Dosier- und Wägevorrichtung über den Drehantrieb 3 den Teller 4 und bringt ihn damit in die in Fig. 1 gezeigte horizontale Stellung.

Zur Feindosierung wird der Antrieb 8 erregt und die Schnecke 6 in Rotation versetzt. Vorzugsweise gleichzeitig wird der Kolben 7 aus der in Fig. 2 gezeigten, die Öffnung 16 abschließenden Stellung in die in Fig. 2 äußerste rechte Stellung gebracht, sodaß zu dosierendes Gut von der Schnecke 6 durch die Öffnung 16 gefördert wird. Hierbei kann zur Dosierung der Antrieb 8 stufenlos regelbar sein.

Ist die gewünschte Menge durch die Öffnung 16 hindurchgefördert, so wird der Antrieb 8 abgeschaltet und der Kolben 7 vorzugsweise möglichst rasch in die sperrende Stellung nach Fig. 2 gebracht, damit kein Material nachfällt.

Bei der gezeigten Ausführungsform lassen sich die verschiedensten Modifikationen durchführen. Beispielsweise könnte die Schnecke 6 durch einen weiteren Kolben ersetzt werden, der Schüttgut in Fig. 2 von links nach rechts zur Öffnung 16 fördert. An die Stelle des Kolbens 7 könnte ein Schieber treten, der die Öffnung 16 ganz oder teilweise freigibt.

Die Fig. 3 und 4 zeigen eine Dosierklappe 50 mit der entsprechenden Eintritts- bzw. Austrittsöffnung 54, 58 und einem Gehäuse 78 für die Förderschnecke 52. Auf der Fläche 60 der Dosierklappe 50 ist eine Rütteleinrichtung angebracht, die beim Ausführungsbeispiel aus zwei meanderförmig ausgebildeten federnden Drahtschleifen 62, 64 besteht. Die Enden der erste Drahtschleife 62 sind an Punkten 72 und 74 entfernt voneinander derart an der Fläche 60 gehalten, daß mittlere Bereiche 76 der Drahtschleife 62 gegen den Umfang der Förderschnecke 52 angedrückt werden. Das eine Ende der zweiten Drahtschleife 64 ist an der ersten Drahtschleife 62 entfernt vom Punkt 74 befestigt, während das andere Ende der zweiten Drahtschleife 64 am Gehäuse 78 mittels eines Bügels 76 derartig gehalten ist, daß es eine Bewegung parallel zur Förderrichtung der Förderschnecke 52 ausführen kann.

Bei Rotation der Förderschnecke 52 werden die mittleren Bereiche 76 der ersten Drahtschleife 62 in Förderrichtung mitgenommen und solange vorgespannt, bis die über die Windungen der erhabenen Wendel der Förderschnecke 52 hinwegschnappen und dabei in Schwingungen versetzt werden, die in einer Ebene annähernd parallel zur Fläche 60 der Dosierklappe 50 verlaufen. Während die erste Drahtseite 62 für ein Rütteln des zuzuführenden Gutes oberhalb der Förderschnecke 52 sorgt, dient die zweite Drahtschleife 64 dazu, einen toten Bereich über dem Gehäuse 78 der Förderschnecke 52 zu verhindern.

An die Stelle zweier Drahtschleifen 62, 64 kann auch eine einzige Drahtschleife treten, oder es können federnde Einzeldrähte an die Stelle der meanderförmigen Windungen der Drahtschleifen treten, wobei jeweils ein Ende jedes Drahtes auf der Fläche 60 festgehalten wird, das andere Ende frei in horizontaler Richtung schwingen kann und der mittlere Bereich gegen den Umfang der Förderschnecke 52 gedrückt wird. Bevorzugt werden die einen Ende jeweils abwechselnd bezüglich der Förderschnecke 52 gegenüberliegend auf der Fläche 60 festgehalten.

Falls gewünscht, kann die derart zweidimensional ausgebildete Rütteleinrichtung mit nach oben abstehenden Drahtenden oder dgl. versehen werden, die die Rüttelwirkung weiter verbessern. Als Material für die Drahtschleife wird bevorzugt federnder Stahl verwendet.

Falls gemäß der angegebenen Modifikation eine andere Fördervorrichtung als die Schnecke 6 zum Einsatz kommt, etwa der genannte weitere Kolben, kann die beschriebene Schütteleinrichtung dadurch in Schwingungen versetzt werden, daß die Oberkante des Kolbens bzw. ein darauf angesetzter Dorn eine Windung nach der anderen der Drahtschleife bei seiner Förderbewegung vorspannt und abschnappen läßt.

## Patentansprüche

1. Einrichtung zum Dosieren und Austragen von fließfähigen Schüttgütern mit einer Öffnung, die durch eine über eine Welle schwenkbare Dosierklappe für eine Grobdosierung geöffnet bzw. geschlossen werden kann, dadurch gekennzeichnet, daß auf der einen Fläche (60) der Dosierklappe (4, 50) eine Rütteleinrichtung befestigt ist und die Schwenkachse der Dosierklappe (4, 50) als Hohlwelle (5) ausgebildet ist, in der eine Fördervorrichtung (6, 7, 52) geführt ist, gegen deren Umfang die Rütteleinrichtung (62, 64) im Bereich einer Zuführöffnung (15) in der Hohlwelle (5) drückt.

2. Einrichtung nach Anspruch 1, dadurch gekennzeichnet, daß sich die Zuführöffnung (15) über einen Bereich von ein Drittel bis zwei Drittel, vornehmlich etwa über die Hälfte, und über einen Winkelbereich zwischen 90° und 180°, vorzugsweise zwischen 120° und 150° nach oben hin erstreckt, während eine Abführöffnung (16) in Abstand in Richtung der Längsachse der Hohlwelle (5) versetzt nach unten hin gerichtet angeordnet ist und kleinere Abmessungen als die Zuführöffnung (15) besitzt.

3. Einrichtung nach einem der Ansprüche 1 oder 2, dadurch gekennzeichnet, daß die Schnecke (6) in der Hohlwelle (5) fliegend gelagert ist und über einen vorzugsweise bezüglich der Drehzahl regelbaren Antrieb (8) selektiv antriebbar ist.

4. Einrichtung nach einem der Ansprüche 8 bis 10, dadurch gekennzeichnet, daß ein Kolben (7) über eine Kolbenstange in der Hohlwelle (5) verschiebbar gelagert ist und mittels eines Hubantriebs (9) selektiv antriebbar ist.

5. Einrichtung nach Anspruch 1, dadurch gekennzeichnet, daß die Rütteleinrichtung (62, 64) aus einer im wesentlichen zweidimensional ausgebildeten Rütteleinrichtung (62, 64) besteht, die sich an mehreren Stellen in Anlage mit dem Umfang der Förderschnecke (52) befindet und bei Rotation derselben zum Schwingen aktiviert wird.

6. Einrichtung nach Anspruch 5, dadurch gekennzeichnet, daß die Rütteleinrichtung (62, 64) aus mindestens einer meanderförmig geführten Federnden Drahtschleife (62, 64) besteht, deren Enden derart festgelegt sind, daß Bereiche der Drahtschleife (62, 64) gegen den Umfang der Förderschnecke (52) drücken, derart daß bei Rotation der Förderschnecke (52) die Drahtschleife (62, 64) in zur Förderrichtung der Förderschnecke parallele Schwingungen versetzt wird.

7. Einrichtung nach Anspruch 6, dadurch gekennzeichnet, daß die Rütteleinrichtung (62, 64) mit nach oben abstehenden Drahtenden bzw. -schleifen (62, 64) versehen ist.

**Claims**

1. Device for metering and delivering of flowable bulk materials including an opening adapted to be opened and closed, respectively, by a metering lid pivotable by a shaft, characterized in that a vibrating device is fixed to a surface (60) of the metering lid (4, 50) and the pivot shaft of the metering lid (4, 50) is formed as a hollow shaft (5) having guided therein a conveying device (6, 7, 52) the vibration device (62, 64) urging against the periphery thereof in the region of a supply opening (15) in the hollow shaft (5).

2. Device of claim 1, wherein the supply opening (15) extends upward over a region from one third to two thirds, preferably, about one half and through an angle range between 90° and 180°, preferably between 120° and 150°, whilst a discharge opening (16) is arranged offset at distance in the direction of the longitudinal axis of the hollow shaft (5) opening downward and having smaller dimensions than the supply opening (15).

3. Device of any of the claims 1 or 2, wherein a worm (6) is journalled one-sided in the hollow shaft (5) and is adapted to be driven selectively by a drive (8) preferably controllable in respect of the rotational speed.

4. Device of any of claims 1 to 3, wherein a piston (7) is supported in the hollow shaft (5) shiftable by means of a plunger and is adapted to be selectively driven by a stroke drive (9).

5. Device of claim 1 wherein the vibration device (62, 64) comprises a vibration device (62, 64) formed essentially twodimensional, engaging the pherihery of the conveying worm (52) at several locations and being activated for vibration upon rotation thereof.

6. Device of claim 5, wherein the vibration device (62, 64) comprises at least one meander-type formed elastic wire loop (62, 64) the ends of which being fixed such that portions of the wire loop (62, 64) urge against the periphery of the feeding worm (52) such that during rotation of the feeding worm (52) the wire loop (62, 64) is caused to vibrate parallel to the feeding direction of the feeding worm.

7. Device of claim 6 wherein the vibration device (62, 64) is provided with upward projecting wire ends or loops (62, 64), respectively.

**Revendications**

1. Dispositif de dosage et de distribution de produits en vrac fluide, avec une ouverture qui peut être ouverte ou fermée pour un dosage grossier, par un clapet doseur pouvant pivoter par l'intermédiaire d'un arbre, caractérisé en ce qu'un dispositif vibrant est fixé sur une surface (60) du clapet doseur (4, 50), et que l'axe de pivotement du clapet doseur (4, 50) à la forme d'un arbre creux (5) dans lequel est logé un dispositif de transport (6, 7, 52) sur la périphérie duquel le dispositif vibrant (62, 64) exerce une pression dans la zone d'une ouverture d'alimentation (15) dans l'arbre creux (5).

2. Dispositif selon la revendication 1 caractérisé en ce que l'ouverture d'alimentation (15) s'étend vers le haut sur une sone allant d'une tiers à deux tiers, principalement sur la environ moitié, et selon un angle compris entre 90° et 180°, de préférence entre 120° et 150°, tandis qu'une ouverture d'évacuation (16) dirigée vers le bas est prévue à distance, en étant décalée dans le sens de l'axe longitudinal de l'arbre creux (5) et possède des dimensions plus petites que l'ouverture d'alimentation (15).

3. Dispositif selon une des revendications 1 ou 2, caractérisé en ce que la vis sans fin (6) est montée en porte à faux dans l'arbre creux (5), et est entraînée sélectivement via une commande (8) réglable de préférence en ce qui concerne la vitesse de rotation.

4. Dispositif selon une des revendications 8 à 10, caractérisé en ce qu'un piston (7) est logé de manière mobile dans l'arbre creux (5) par l'intermédiaire d'une tige de piston et est actionnable sélectivement au moyen d'une commande de course (9).

5. Dispositif selon la revendication 1, caractérisé en ce que le dispositif vibrant (62, 64) consiste en un dispositif vibrant (62, 64) essentiellement bidimensionnel juxtaposé en plusieurs points à la périphérie de la vis de transport (52) et amené à vibrer par rotation de cette dernière.

6. Dispositif selon la revendication 5, caractérisé en ce que le dispositif vibrant (62, 64) consiste au moins en une boucle de fil élastique (62, 64) formant des méandres, dont les extrémités sont fixées de telle sorte que des zones de la boucle de fil (62, 64) appuient sur la périphérie de la vis transporteuse (52), de façon telle que, lorsque la dite vis (52) tourne, la boucle de fil (62, 64) est déplacée suivant des vibrations parallèles à la direction de transport de la vis transporteuse.

7. Dispositif selon la revendication 6, caractérisé en ce que le dispositif vibrant (62, 64) est doté de bouts de fil ou de boucles de fil (62, 64) dirigés vers le haut.

Fig.2

Fig.1

Fig.4

Fig 3